# EUROPEAN PATENT SPECIFICATION

(11) **EP 3 085 679 B1**
(45) Date of publication and mention of the grant of the patent: **20.06.2018**
(21) Application number: 15382201.0
(22) Date of filing: 22.04.2015
(51) Int. Cl.: C05F 11/08, C05G 3/00, C05F 11/00

(54) **A COMPLEX MINERAL FERTILIZER COMPRISING THE RHIZOBIUM LEGUMINOSARUM MICROORGANISM, PRODUCTION PROCESS AND USES THEREOF**
KOMPLEXER MINERALDÜNGER MIT DEM RHIZOBIUM LEGUMINOSARUM-MIKROORGANISMUS, HERSTELLUNGSVERFAHREN UND VERWENDUNGEN DAVON
ENGRAIS MINÉRAL COMPLEXE COMPRENANT LE MICRO-ORGANISME RHIZOBIUM LEGUMINOSARUM, PROCÉDÉ DE PRODUCTION ET SES UTILISATIONS

(43) Date of publication of application: 26.10.2016
(73) Proprietor: Fertiberia, S.A., 28046 Madrid (ES)
(72) Inventor: Mulas García, Rebeca, 24004 León (ES); González Andrés, Fernando, 24004 León (ES); Brañas Lasala, Javier, 28046 Madrid (ES); Mulas García, Daniel, 24004 León (ES)
(74) Representative: Elzaburu S.L.P.

(56) References cited:
- EP-A1- 0 083 267
- EP-A2- 0 017 565
- WO-A1-95/06623
- WO-A1-2016/007460
- FR-A1- 2 611 698
- US-A- 1 252 332
- US-A1- 2007 131 009
- US-A1- 2014 352 376

## Description

### Technical field of the invention

The present invention relates to the field of mineral, organic or organo-mineral, nitrogenated, phosphated or potassic compound or complex fertilizers, whether they are NP, PK, NK or NPK, which are coated with strains of the *Rhizobium leguminosarum* specie, which act as PGPRs.

### Background of the invention

Mineral fertilizers are well-known in the state of the art as plant growth enhancers, and their use is widespread among farmers so as to increase the yield of a great number of crops. However, there is market demand for increasingly efficient fertilizers which reduce the risk of contamination of the environment and at the same time achieve optimal results in the crops where they are used. For this reason, innovation in this field is constant, continuously seeking improvements in their composition or use, to increase the efficiency of this type of compounds.

The bacteria genus *Rhizobium* and other similar genera (generally called Rhizobia) are commonly known for their natural ability to fix nitrogen to the roots of leguminous plants by nodule symbiosis. The process has been widely studied by many experts, and each of its phases is described in detail in many books and scientific publications (Jose Olivares Pascual, 2008). Due to the benefits of this symbiosis, the inoculation of this type of micro-organism into the seeds of leguminous plants is widespread among farmers who grow leguminous species such as beans, lentils, chickpeas, etc. However, it has also been proven that under certain conditions, Rhizobia may act as promoters (called PGPR or *Plant Growth Promoting Rizobacteria*) of the development of cereals and other crops, increasing their yield. PGPRs are bacteria which, in rhizospheric or endophytic association with the plants, benefit the crops in terms of growth and plant health. It has been stated recently that said beneficial effect caused by the PGPRs may be combined with the usual dosage of fertilizers in order to bring about an even greater increase in crop yield (Adnan et al, 2014).

However, the joint application of the Rhizobium with the fertilizer in a single composition entails a series of problems and difficulties which to date still represent a challenge which current techniques have been unable to overcome. Until now, Rhizobium has never been applied directly on the granule of mineral fertilizer, but is usually applied directly to the seed of the cereal (Marks et al, 2013), as the conditions caused by the fertilizer are in many cases lethal to the bacteria when they are in direct contact with the fertilizer. The fertilizer granule causes desiccation conditions within the granule itself, and once applied to the soil, causes high salinity in its immediate surroundings, conditions which are generally incompatible with the survival of the bacteria. In the fertilizer itself, the compounds are found at particularly high concentrations, with the intent of expanding into the surroundings of the granule. Due to the fact that the physiochemical conditions created in the surroundings of the granule of fertilizer are harmful to the micro-organisms, the formulations developed to date have only used sporulated micro-organisms (US 8,097,280 B2).

FR2611698 A1 discloses a solid fertilizer coated with a powder of micro-encapsulated inoculum, where the granular fertilizer is mixed with a powder of the micro-encapsulated inoculum in a drum until the mixture is homogeneous. A coating product such as an amine, a natural wax or a synthetic wax can be sprayed on the granules of the fertilizer.

EP 0 083 267 A1 discloses a method of preparing an inoculum by preparing a culture medium containing microorganisms of the genus *Rhizobium* and xanthan gum and carob flour and the drying the gel.

WO 2016/0074007460 A1 discloses a biological-laden dry fertilizer including a dry fertilizer granule and a coating inoculated with a biological agent and applied to the dry fertilizer granule. The biological coating is a solution or suspension comprising water or oil and at least one biological agent, which is a biological chemical, plant extract, microbial agent, and/or a living organism.

With regard to the concentration of Rhizobia necessary to obtain positive results in crops, there are no studies which can be extrapolated to the development of the invention of this application. Among the approximate data available, Hirsch, P.R. 1996 mentions that the dose of Rhizobia necessary to guarantee nodulation in leguminous plants is 10⁴ Rhizobia/g of soil; Albareda et al. 2009 state that in studies on soya, maximum production has been achieved with a dose range of 10⁵ - 10⁶ Rhizobia/seed; in turn, Penna et al. argue that there are certain discrepancies between authors in establishing the dose of Bradyrhizobia corresponding to the maximum number of nodules, in some cases being 10⁵ bacteria/seed and in others 10⁶ bacteria/seed. Finally, Herrmann et al. reveal how the quality standards of the inoculants vary from country to country, but generally are between 10³ and 10⁶ CFU/seed.

It is for this reason that said technique has a series of significant limitations whose consequences are in some cases quite serious, as for example the application cannot be done in a single step, either for a crop which has already sprouted and which is in its growth phase, or to fertilize a soil where it is intended to subsequently sow a crop. Another limiting factor is the method of applying the fertilizer, its solid form being most suited to the desired result of stimulating plant growth, as it facilitates transport and its subsequent application to the crops. It would therefore be preferable to have a crop growth enhancer in solid format, other than for leguminous plants, which could be applied once only and which would be economically viable, as well as being safe and beneficial to the plants.

The invention provides an efficient solution to these problems.

### Summary

In general, the invention relates to a composition which comprises a fertilizer, preferably a mineral fertilizer, and more preferably a complex mineral fertilizer, which comprises a rhizospheric or endophytic micro-organism with PGPR properties and a protector to ensure the microorganism's viability.

Thus, in a first aspect, the invention relates to a solid fertilizer composition comprising a mineral fertilizer, at least partially coated with a rhizospheric microorganism with the ability to act as PGPR that is protected by at least one microorganism-protective compound to enable its survival under the physiochemical conditions of the fertilizer when the microorganism survival is tested according to the Most Probable Number method, wherein the microorganism is a species of the *Rhizobium* genus. Thus, a "protective compound" is understood to be a compound which enables the substantial and/or functional survival of the micro-organism under the physiochemical conditions caused by the dissolved fertilizer.

More specifically, the present invention relates to a composition comprising a complex mineral fertilizer, a rhizospheric or endophytic micro-organism with PGPR capabilities selected from at least one of the *Rhizobium leguminosarum* CECT 7685, CECT 8873, CECT 8874 or CECT8875 strains deposited at the Spanish Type Culture Collection, in any combination, and a protector to ensure the micro-organism's viability in terms of both survival and function, this protector being carob gum.

In a second aspect, the invention relates to a procedure for the manufacture of a composition of fertilizer comprising the stages of:
a) growing the strain on YMA solid medium;
b) inoculating the resulting culture from stage (a) in YMB liquid medium;
c) adding carob gum to the culture from stage (b); and
d) coating the granules of mineral fertilizer at least partially with the culture from stage (c).

In a third aspect, the invention relates to a procedure for the enhancement of crop growth, which comprises the stage of transferring the composition described herein to the plants of the crop.

And in a fourth aspect, the invention relates to the use of the composition on non-leguminous crops or on cereals, in particular barley and wheat.

### Description of the figures

- Figure 1:: Example 1: Vegetative parameters of the treatments assessed on wheat plants.
- Figure 2:: Example 2: Nitrogen content of the aerial biomass of the wheat plants, 70 days subsequent to sowing.
- Figure 3:: Example 2: Biomass production of the wheat plants, 95 days subsequent to sowing.
- Figure 4:: Example 3: Vegetative parameters assessed on barley plants.
- Figure 5:: Example 3: Nitrogen content of the barley plants.
- Figure 6:: Example 4: Yield of *Core* wheat; percentage data of the increase in yield due to treatment with Rhizobia compared with the control, fertilized at 80%.
- Figure 7:: Example 4: Yield of *Arthur Nick* wheat; percentage data of the increase in yield due to treatment with Rhizobia compared with the control, fertilized at 80%.

### Detailed description of the invention

The object of the present invention relates to a composition comprising a fertilizer, a rhizospheric or endophytic micro-organism with PGPR capabilities, and a protector to ensure the microorganism's viability in terms of both survival and function.

Said fertilizers may include mineral, organic or organo-mineral, nitrogenated, phosphated or potassic compound or complex fertilizers, whether they are NP, PK, NK or NPK.

Complex organo-mineral fertilizers are obtained by the combination of inorganic or mineral fertilizers with organic fertilizers. They are therefore characterised in that their composition includes not only mineral nutrients but also organic nutrients. The organic material contained in the product, exclusively of vegetable origin, acts by improving the physical conditions of the soil, improving its texture, facilitating its permeability, enabling aeration, favouring microbial activity (under certain conditions) and increasing the water- and nutrient-holding capacity in the clay-humic complex. Its most significant effect is that it acts by complexing the nutrients of the fertilizer, preventing their blockage in the soil, thus making their assimilation by the plant more effective.

Fertilizers are products which contain one, two or three primary nutrients; nitrogen, phosphor and potassium, and may also contain secondary nutrients and micronutrients. They are used to balance the nutrient content of the soil according to the content of the same, taking into account the needs of the crop to be planted and depending on the yield it is hoped to achieve. In accordance with the needs of the crops and the characteristics of the soil, the most appropriate fertilizer can be selected, with the possibility of not including one or more of the three essential elements should it not be necessary.

Fertilizers, and particularly those in solid form, are applied in sufficiently high concentrations in order that, when dissolving, they reach an optimal dose for the crops. This is why, prior to reaching the optimal dose, conditions arise which in some cases may be toxic to the microorganisms due to the high concentrations of compounds and/or the high salinity they may cause. The conditions arising in locations close to freshly-spread fertilizers are particularly extreme, reaching levels which initially prevent the survival of some microorganisms.

Solid fertilizers are firmly established in most crops, as their transport is simple and their uniform distribution is rapid and effective. It is for this reason that most farmers possess machinery for the distribution of solid fertilizers. On the contrary, liquid fertilizers are only used within a radius of 200 to 300 km from the fertilizer factory, as they require tanker trucks for transport and specialised machinery, and as they require the addition of water, costs are significantly increased.

Solid fertilizer is totally established worldwide, while in liquid form it is only used in certain more localised areas. The solid form is generally richer than the liquid form. The fertilizers mentioned in this application can be purchased freely from companies specialised in this type of compounds, their acquisition by the general public being relatively simple.

*Plant Growth Promoting Rhizobacteria* (PGPR) are a group of bacteria which includes rhizobia in general and the *Rhizobium* genus in particular, which in rhizospheric or endophytic association with the plants, have a growth and health-related beneficial effect on crops of non-leguminous plants. This is achieved via a wide range of mechanisms: improving plant nutrition by solubilising nutrients which cannot be absorbed from the soil, increasing the surface area of the radicle, stimulating growth via the production of phytohormones, overcoming situations of stress due to drought, salinity or heavy metals, and many other unfavourable situations.

The *Rhizobium* genus, like other similar microorganisms, is not known for their resistance to adverse conditions, being relatively sensitive to the surrounding conditions. As described in the background of the application, due to the fact that the physiochemical conditions created in the immediate surroundings of the granule of fertilizer are harmful to microorganisms, the formulations developed to date have used only sporulated microorganisms (US 8,097,280 B2). This is why, due to their lacking specific defence mechanisms (such as the spores which are characteristic of other bacterial genera) it is surprising and *a priori* totally unexpected that, as a result of the data obtained in the tests, the bacteria of this genus survived under conditions as extreme as those induced by the fertilizers. The possibility of using other bacterial species with PGPR properties exists, providing that they are beneficial to the crops and that they withstand the conditions caused by the fertilizer. For the composition, a series of *Rhizobium leguminosarum* strains with the best characteristics which yielded the best results in the tests were selected:

| **Strain** | **Distinctive features** |
|---|---|
| **CECT 8873 - LET 4910** | The strain with the highest production of indolacetic acid (IAA) and which also produces siderophores. |
| **CECT 8874 - LCS 2403** | A strain with a high IAA production, with a different geographic origin.. |
| **CECT 8875 - LPZ 2704** | High ACC deaminase activity. |
| **CECT 7685 - LBM 1210** | Solubilizer of mineral phosphate precipitates. |

Due to the extreme conditions of compound concentration and high salinity, the application of some type of protective compound is advisable, its protective function ensuring the survival of the *Rhizobium.* Said compound must not alter the bacterial functions, but only preserve its functional and replication capabilities, whether in the *Rhizobium leguminosarum* specie or any other used for the same purpose.

Bacteria of the *Rhizobium* genus are harmless to humans (García-Fraile et al. 2012) and are capable of producing different types of polysaccharides. Among rhizobial polysaccharides, exopolysaccharides (EPS) characterise this genus, being compounds formed by carbohydrates secreted into the medium through the cell walls; these in turn may be acidic or neutral. EPS exhibit a protective function on the bacterial cell under the osmotic and desiccated conditions described herein. Among the compounds which are exogenous to the bacteria and which fulfil this same activity are several vegetable polysaccharides from which carob gum was selected for this purpose. Carob gum is formed from galactomannan polysaccharides and it is the extract obtained from the endosperm of the seeds of the carob tree (*Ceratonia siliqua, L*.) by mechanical abrasion or a chemical process. Galactomannan polysaccharides are those which consist of a mannose chain linked with lateral groups of galactose in varying proportions; the proportion of carob gum is mannose:galactose 4:1. In this type of compounds the solubility depends on the galactose content and its distribution.

The application of carob gum, as revealed in the tests mentioned in the section Examples of this application, is able to play a protective role against the extreme conditions of compound concentration, desiccation and high salinity, and is also able to stimulate the production of polysaccharides by the same bacteria, which in turn aids in the maintenance of conditions suitable for bacterial life. Among rhizobial polysaccharides, exopolysaccharides (EPS) characterise the *Rhizobium* genus, being compounds formed by carbohydrates secreted into the medium through the cell walls; these in turn may be acidic or neutral. EPS exhibit a protective function on the bacterial cell under osmotic and desiccated conditions, and therefore aid in the maintenance of the survival and viability of the bacteria, together with the carob gum. Therefore, the carob gum not only aids in the protection of the bacteria *per se,* but also enhances the production mechanisms of bacterial EPS which in turn play a protective role against the conditions of the fertilizer.

The procedure for the manufacture of the composition consists of the following stages:
a) growing the strain of the microorganism on YMA solid medium;
b) inoculating the resulting culture from stage (a) in YMB liquid medium;
c) adding carob gum to the culture from stage (b); and
d) coating the granules of mineral fertilizer at least partially with the culture from stage (c).

The pure culture of the *Rhizobium leguminosarum* strains occurs initially on YMA (Yeast Mannitol Agar) solid medium (Vincent. 1970) and is subsequently inoculated into YMB (Yeast Mannitol Broth) liquid medium to obtain the pure culture. The incubation temperature in all cases is 28ºC and the incubation time between 3 and 7 days, preferably 5 days. The distinguishing feature in comparison with other standard YM-type culture media is that between 0.25% and 0.5% of carob gum is added to the culture medium in which the rhizobia are growing; the addition of this protector occurs two days after the inoculation of *Rhizobium leguminosarum,* in order to enhance the production of exopolysaccharides by the bacteria. In a preferred embodiment the concentration of carob gum is 0.25%, in a more preferred embodiment the concentration will be 0.5%, and in a still more preferred embodiment the concentration will be 1.0%. After 5 days' incubation the maximum growth is achieved (6 x 10⁸ CFU/ml), coinciding with the maximum production of exopolysaccharides. The coating of the fertilizer by direct spraying is then commenced, to be subsequently air-dried.

Optimal concentrations of rhizobia have been designed for use as coatings for fertilizers, proving experimentally that the concentrations reached are effective. The real concentrations applied to the fertilizers may vary between 1 x 10⁸ and 6 x 10⁸ CFU/ml, possibly being between 6 x 10⁷ CFU/ml and 6 x 10⁹ CFU/ml. This concentration entails a final dose per seed or crop plant of between 1 x 10² and 9 x 10² CFU. The effective functional concentration reached per seed or plant is at least 1 x 10² CFU. The minimum functional concentration is considered to be the concentration of rhizobia per plant which is sufficient for its survival and for the production of a significantly positive effect on the crops, whether in cereals or any other non-leguminous crop.

The composition used ensures that the production of exopolysaccharides is sufficiently abundant for the rhizobium to survive when exposed to the extreme conditions of the fertilizer.

**Table 1. Composition of YMA medium:**

| **Compound** | **Quantity** |
|---|---|
| K₂HPO₄ | 0,5 g |
| MgSO₄ | 0,2 g |
| NaCl | 0,1 g |
| Mannitol | 10,0 g |
| Yeast extract | 0,2 g |
| Agar | 20,0 g |
| Distilled water | 1,0 L |
| Carob gum | 0,5% |

The efficacy of the product has been proven in wheat and barley plants in microcosmic tests and in the field, compared with rhizobium-free controls, as presented in the "Examples" section.

One of the peculiarities of the invention is that the effective concentration of rhizobia necessary to ensure the viability of the microorganism is considerably less than that recommended in the literature of the nearest state of the art for the case of leguminous plants (there is no bibliography concerning minimum concentrations for a PGPR effect). The reduction of the minimum functional concentration is, *a priori,* an unexpected advantage, as it was not foreseeable that in the cases where the composition applied to each seed or plant reached a final concentration of between 1 x 10² and 9 x 10² CFU, the rhizobia could survive and perform their beneficial effect on the crops. For the first time, a positive effect has been achieved in the field for microbial applications of rhizobia at such low concentrations. The scientific community has stated that such concentrations of microorganisms are ineffective in this type of situation, in contrast to what could be anticipated or commonly accepted. The main difficulties and reasons put forward, which have been overcome in the compositions developed, have been the impossibility of survival of the rhizobia under those conditions and that they would not reach the rhizosphere of the plant with a concentration sufficient to perform their PGPR activity.

The compositions described herein are applied in the same way as farmers have applied fertilizers to their crops to date, with a standard solid mineral fertilizer spreading machine. This ease of application is also an advantage to be held present with regard to final users, as many farmers already possess this type of machinery which distributes evenly the granules of fertilizer directly on the terrain. The mineral fertilizer incorporates the microorganisms, but the agricultural work remains totally unchanged, though it is essential to abide by the expiration date and the recommended storage conditions. Thus, the application of the compositions described herein may be applied in a single step, facilitating the work performed by the farmers while reducing costs due to the decrease in the time and resources necessary. Another significant advantage is that the seed of the crop is not required for the direct application of the composition, as is the case with some of the prior art. In this case, the composition may be applied whenever it is desired, whether to the seed, at the time of sowing, or later in the growth cycle of the crop. It also exists the possibility applying it directly to the soil, without any need for the presence of a crop, as it also contributes to the improvement of the properties of the same.

The application of compositions is not necessarily limited to a particular specie, but may be applied to many crops of interest, it being in cereals where a significant improvement has been proven when using the composition developed by the applicant. However, on endowing the soil with better properties and nutrients for agricultural activity, the present invention may be used for any type of crop, be it for human consumption or not, as its growth will clearly be improved.

The compositions described herein represent an efficacious and efficient solution to the limitations and problems which to date had remained unsolved by the prior art. Until now, the direct combination of rhizobia strains with mineral fertilizer had not been described as a method for the application of the rhizobia to the plants, for the reasons described above. Until now, the most similar practice entailed the application of the rhizobia to the seed of the cereal. The reason why this has always been the procedure is twofold. Firstly, the scientific community had stated that the physiochemical conditions created in the immediate surroundings of the fertilizer granule were lethal for non-sporulated microorganisms such as rhizobia. Under such conditions, the rhizobia do not survive and therefore cannot have a PGPR effect. Secondly, the concentration reached in the surroundings of the seeds of the crop, when the application is performed by coating the fertilizer granule, is considered by the scientific community to be ineffective for crops. There exist data on the efficiency of the inoculants for leguminous plants which situate the minimum effective concentration at 10⁵ CFU/ml (Herrmann and Lesueur, 2013), there being no efficacy studies on different concentrations when applied as PGPR (together with a fertilizer and in the absence of nodular symbiosis). The lack of studies to date reveals that the invention developed represents a clear inventive breakthrough which improves cultivation techniques by the successful use of rhizospheric microorganisms in a single composition with fertilizers.

### Examples

### Example 1: Survival test in growth chamber of Rhizobium leguminosarum in fertilizer, and positive interaction with cereal plants subsequent to its application to the soil.

The specific aims of this test were:
- To verify the survival of the bacteria on the granule of fertilizer and during the dissolution process of the same, so that they reach the soil and can be re-isolated from the same.
- To verify the effect of the coated fertilizer on the development of wheat plants.

The experiment was performed in a growth chamber at 25ºC day / 14ºC night and with 10 hours' light and 14 hours' darkness. The experimental units were 32 x 21 x 7cm trays with 2 rows of 15 plants with a separation between rows of 19cm and between plants of 0.9cm.

The texture of the soil used was clay loam with pH 8.5 and an organic matter content of 1.66%. The dose of wheat seed (of the *Rudo* variety) was 200kg / hectare and the dose of fertilizer was 50kg / hectare. Irrigation was performed every 4 days, in order to subject the soil to a dynamics of moistening and drying.

The treatments assayed were: control fertilized with 15-35-0 + Zn complex mineral fertilizer and compositions according to the invention based on the 15-35-0 + Zn fertilizer coated with the LBM1210 strain of *Rhizobium leguminosarum.*

Survival in the soil was analysed 35 days after fertilizing by counting the rhizobia in the soil using the Most Probable Number (MPN) method (Beck et al. 1993) using bean trap plants (*Phaseolus vulgaris L*.). This technique was used because the *Rhizobium leguminosarum* strain has been isolated from bean nodules, and is therefore infectious to the plant. It had been verified beforehand that there were no native rhizobia in the soil to nodulate the bean.

The results (Table 2) show how the treatment fertilized with compositions in accordance with the invention presented 100 rhizobia /g of soil at the time of sampling. Said rhizobia maintain their activity as they conserve their ability to infect the bean plants, forming nodular structures in their roots.

**Table 2. Rhizobia count by MPN.**

| **Treatments** | **10⁻¹** | **10⁻²** | **10⁻³** | **10⁻⁴** | **Nodulated plants** | **MPN (Rhizobia/g of soil)** |
|---|---|---|---|---|---|---|
| **Control⁽¹⁾** | 0 | 0 | 0 | 0 | 0 | 0 |
| **Fertilized Control** | 0 | 0 | 0 | 0 | 0 | 0 |
| **Fertilized with compositions in accordance with the invention ⁽²⁾** | 4 | 3 | 0 | 0 | 7 | 100 |

| | | | | | | |
|---|---|---|---|---|---|---|
| (1) The object of this control is to verify the absence of native rhizobia in the soil which might nodulate the bean. (2) This treatment is comprised of mineral fertilizer coated with the LBM1210 strain of Rhizobium leguminosarum, using a blend of the exopolysaccharides produced by the rhizobium itself and carob gum as a protector. | | | | | | |

The effect on wheat plants was verified by analysing growth parameters 35 days after sowing.

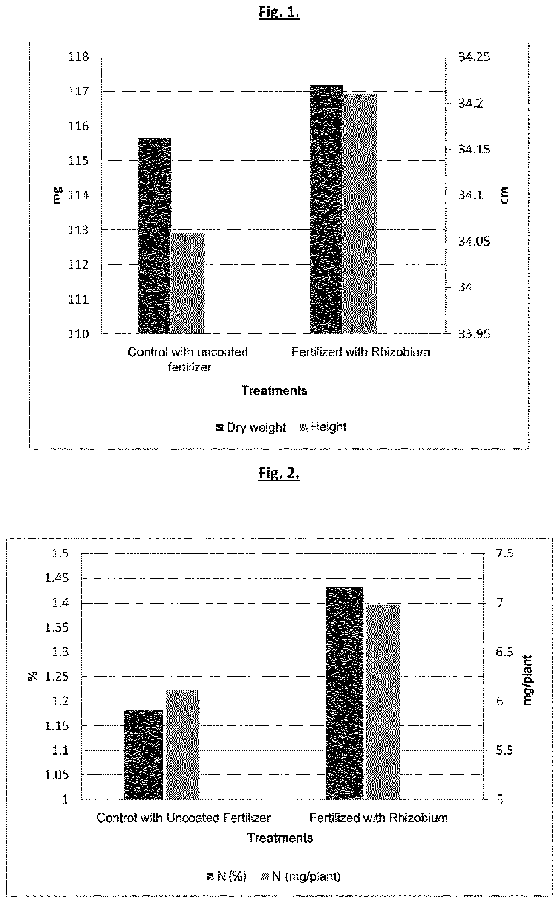

Figure 1 portrays how the fertilizer coated with *Rhizobium* surpassed the control fertilized with uncoated fertilizer in dry weight and in height.

The rhizobia-coated fertilizer improved the fresh and dry biomass results of the fertilized control. The LBM1210 strain of *Rhizobium leguminosarum* displays a clear tendency to improve fertilization efficacy on a microcosmic level in a growth chamber, when applied as a coating of the mineral fertilizer, giving rise to higher biomass production than the control treated with fertilizer without the rhizobia coating.

### Example 2: Study of the compositions of the present invention applied to cereal on a microcosmic level. Microcosmos of wheat plants.

The specific aim was:
- To know the effect of the composition on the vegetative development of wheat.

Each experimental unit consisted of 5 plant pots and was repeated 3 times. In each pot (19 x 14 x 14) 5 wheat seeds were sown 0.9cm apart and at a depth of 1.5cm. The experiment was performed in a greenhouse and the substrate consisted of a mixture of loamy soil at pH 9.36 and 1.74% organic matter with exfoliated vermiculite at 50% by volume. Irrigation was performed every 4 days with 0.5L of water.

The dose of wheat seed (of the *Rudo* variety) was 200kg / hectare and the dose of 15-35-0 + Zn fertilizer was 50kg / hectare. Irrigation was performed every 4 days, in order to subject the soil to a dynamics of moistening and drying.

The treatments assayed were: control fertilized with 15-35-0 + Zn and compositions according to the invention based on the 15-35-0 + Zn fertilizer and the LBM1210 strain of *Rhizobium leguminosarum.*

The final concentration of rhizobia per seed was 1 x 10² CFU /seed.

Two samples were taken: 70 days after sowing (DAS) to analyse the nutrient content and 95 DAS to analyse vegetative parameters

**Table 3. Results from wheat plant microcosmos**

| **Treatment** | **70 DAS** | | **95 DAS** | |
|---|---|---|---|---|
| | **N %** | **N (mg** / **plant)** | **Fresh biomass (mg / plant)** | **Dry bio-mass (mg / plant)** |
| **Control** | 1,133 | 4,738 | 1586,7 | 450,0 |
| **Uncoated fertilized control** | 1,183 | 6,111 | 2106,7 | 596,7 |
| **Fertilized with compositions in accordance with the invention** | 1,433 | 6,980 | 2130,0 | 766,7 |

Treatment with compositions in accordance with the invention (Table 3, Figure 2) presented a higher concentration of nitrogen in the biomass and a higher total N content than the control with non-inoculated fertilizer.

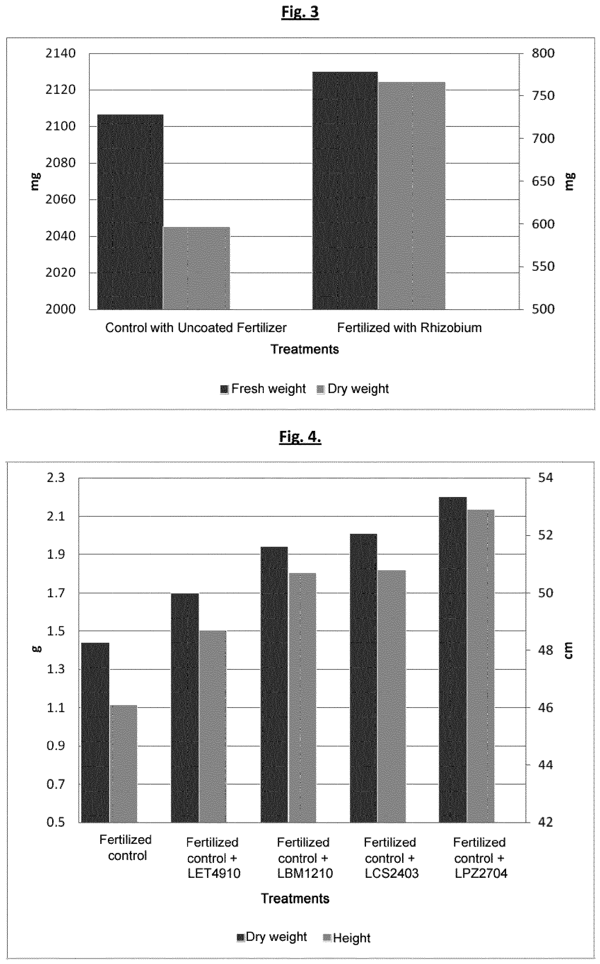

The treatment coated with the invention (Table 3, Figure 3) surpassed the control with non-inoculated fertilizer in both fresh and dry biomass. Therefore, the compositions of the invention improve fertilization efficacy on a microcosmic level in a greenhouse, even in direct competition with the native microorganisms of the soil.

### Example 3: Study of the compositions of the present invention applied to cereal on a microcosmic level. Microcosmos of barley plants.

The specific aim was:
- To know the effect of the composition on the vegetative development of barley.

As in the previous assay, each experimental unit consisted of 5 plant pots and was repeated 3 times. In each pot (19 x 14 x 14) 5 barley seeds were sown 0.9cm apart and at a depth of 1.5cm. The experiment was also performed in a greenhouse, but the substrate used was a clay loam soil with a pH of 8.69 and an organic matter content of 1.54%. The dose of barley seed (of the *Quinta* variety) was 200kg/hectare and the dose of 15-35-0 + Zn fertilizer was 50kg / hectare. Irrigation was performed every 4 days, in order to subject the soil to a dynamics of moistening and drying.

The treatments studied were: control fertilized with 15-35-0 + Zn complex mineral fertilizer and The Invention based on said fertilizer and the LET4910, LBM1210, LCS2403 and LPZ2704 strains of *Rhizobium leguminosarum.*

The concentration of rhizobia applied with the fertilizer was 6 x 10⁸ CFU/ml, entailing that the concentration of bacteria reaching the seed or plant was 1.2 x 10²/CFU.

**Table 4. Results from barley plant microcosmos.**

| **Inoculated strain** | **Dry weight/plant (g)** | **Maximum height (cm)** |
|---|---|---|
| Fertilized Control | 1,44 | 46,1 |
| Composition with LET4910 | 1,70 | 48,7 |
| Composition with LBM1210 | 1,94 | 50,7 |
| Composition with LCS2403 | 2,01 | 50,8 |
| Composition with LPZ2704 | 2,20 | 52,9 |

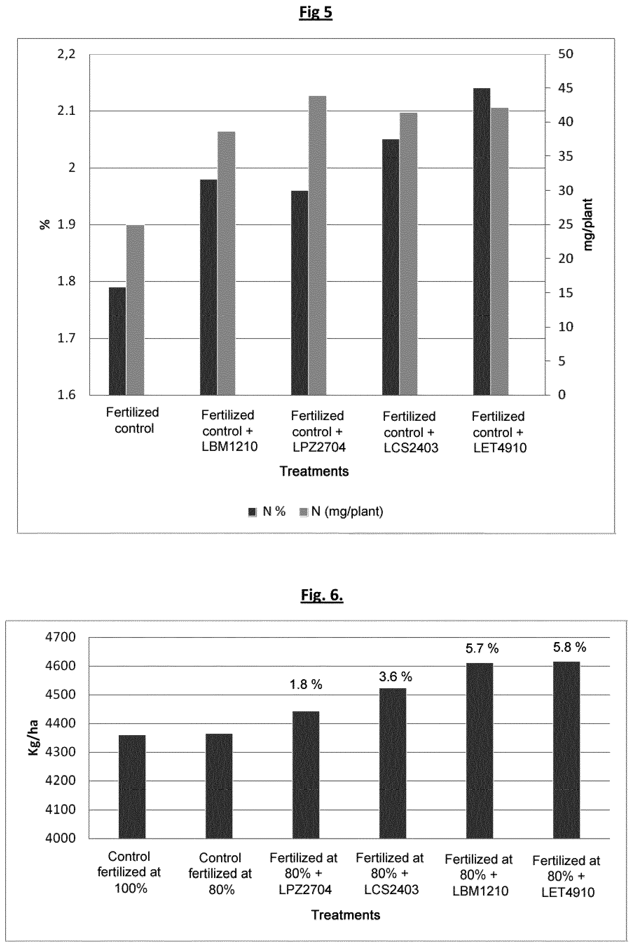

All the treatments with compositions in accordance with the invention and for any of the strains used improved the dry weight and maximum height parameters (Table 4, Figure 4) and the plant nitrogen content (Table 5, Figure 5).

**Table 5. Results of nitrogen content in aerial biomass**

| **Inoculated strain** | **N** (%) | **N** / **plant** (mg) |
|---|---|---|
| Control | 1,79 | 25,01 |
| LBM1210 | 1,98 | 38,63 |
| LPZ2704 | 1,96 | 43,86 |
| LCS2403 | 2,05 | 41,47 |
| LET4910 | 2,14 | 42,11 |

### Example 4: Study of the effect of compositions of the present invention applied to cereal in the field.

The specific aim was:
- To analyse the effect of the composition on the yield of cereal crops in the field.

The experimental design of each plot included two variables: the genotype and the treatment, and consisted of randomly chosen complete blocks, repeated four times. The dimensions of each plot were 3m wide by 10m long; therefore each plot measured 30m², of which the central 15m² were harvested.

The crop production was analysed in terms of yield.

The assay with *Core* wheat was performed in a clay-loam soil with pH 7.6 and 1.41% organic matter, while the assay on *Arthur Nick* wheat was performed in a sandy-clay loam soil with pH 8.2 and 1.08% organic matter.

**Table 6. Location of assays in the field.**

| **Assay** | **Plot** | **Location** | **Coordinates** |
|---|---|---|---|
| *Core* wheat. | Berengenilla | Carmona, Sevilla | 37º 17*'* 50,6*"* N - 05º 40*'* 20,7*"* O |
| | | | Altitude 60 m |
| *Arthur Nick* wheat. | Algarabejo | Alcalá de Guadaira, Sevilla | 37° 20*'* 0*"* N -- 5° 51*'* 0*"* |
| | | | Altitude 46 m |

The treatments assayed are presented in Table 7. The composition in accordance with the invention was applied in the basal dressing. In the case of the *Core* wheat, an 18-46-0 fertilizer was used, and an 8-15-15 for the *Arthur Nick* wheat. Three controls were used, one with no fertilizer, one with a 100% dose of fertilizer and one with an 80% dose. The treatments with the compositions in accordance with the invention were based on the corresponding mineral fertilizer at 80% and the rhizobia strains presented in Table 7.

**Tabla 7. Tratamientos y abonado de fondo.**

| **Treatments** | | ***Core* wheat DAP 18-46⁽¹⁾** | | | | ***Arthur Nick* wheat NPK 8-15-15⁽³⁾** | | | |
|---|---|---|---|---|---|---|---|---|---|
| | | **Fertilizer dose** | **N** | **P₂O₅** | **K₂O** | **Fertilizer dose** | **N** | **P₂O₅** | **K₂O** |
| | | **(kg/ha)** | | | | **(kg/ha)** | | | |
| 1 | Unfertilized control | 0 | 0 | 0 | 0 | 0 | 0 | 0 | 0 |
| 2 | Control fertilized at 100% | 200 | 36 | 92 | 0 | 500 | 40 | 75 | 75 |
| 3 | Control fertilized at 80% | 160 | 29 | 74 | 0 | 400 | 32 | 60 | 60 |
| 4 | Composition with LET4910 | 160 | 29 | 74 | 0 | 400 | 32 | 60 | 60 |
| 5 | Composition with LBM1210 | 160 | 29 | 74 | 0 | 400 | 32 | 60 | 60 |
| 6 | Composition with LCS2403 | 160 | 29 | 74 | 0 | 400 | 32 | 60 | 60 |
| 7 | Composition with LPZ2704 | 160 | 29 | 74 | 0 | 400 | 32 | 60 | 60 |

The final concentration of rhizobia that reaches the soil after application of the fertilizer varies between 3 x 10² and 9 x 10² CFU /seed.

The top-dressing is detailed in Table 8 and the agricultural work executed during the field tests is shown in Table 9.

**Table 8. Top-dressing in field tests.**

| **Plot** | **1^{st} Dressing** | | | | **2^{nd} Dressing** | | | |
|---|---|---|---|---|---|---|---|---|
| | **Fertilizer** | **Kg N/ha** | **Dose (Kg/ha)** | **Date** | **Fertilizer** | **Kg N/ha** | **Dose (Kg/ha)** | **Date** |
| Core *wheat* | Urea 46% | 69 | 150 | 07/02/13 | NAC 27% | 41 | 150 | 26/03/13 |
| Arthur Nick *wheat* | Urea 46% | 69 | 150 | 25/02/14 | - | - | - | - |

**Table 9. Tasks done on the crops in the field tests.**

| **Test data** | ***Core* wheat** | ***Artur Nick* wheat** |
|---|---|---|
| Previous crop | Barbecho | Girasol |
| Basal dressing | 23/11/12 | 21/11/13 |
| Sowing date | 29/11/12 | 12/12/13 |
| Sowing dose (kg/ha) | 210 | 220 |
| Top-dressing | 07/02/13 | 25/02/14 |
| | 26/03/13 | |
| Fungicide application | 15/04/13 | 20/03/2014 |
| Herbicide application | 15/02/13 | 25/02/14 |
| Date of harvesting | 10/06/13 | 02/06/14 |

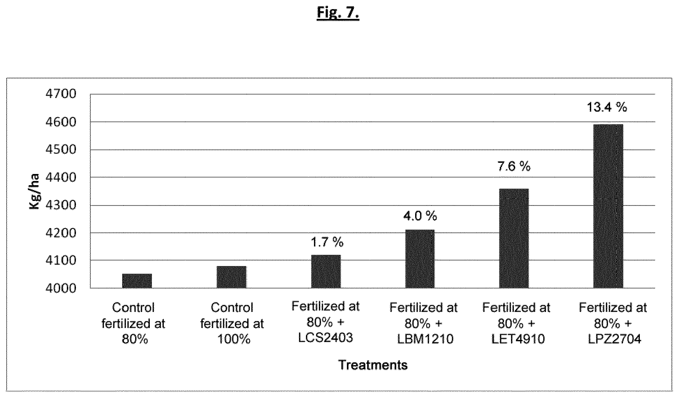

The treatments with the compositions in accordance with the invention gave a greater harvest yield than the fertilized treatments (Figure 6 and Figure 7). In both cases, the composition with the LET4910 strain gave good results (Figure 6 and Figure 7).

The increases in yield surpassed 5%, an increase which is considered to be agronomically and economically viable.

### Conclusions

The rhizobia survive on the surface of the granules of fertilizer, and subsequent to the solubilisation process of the same in the soil, reach the rhizosphere of the plants in an optimal dose and conditions to exert a PGPR effect, promoting the growth of the crop, both in wheat and in barley.

Granulated mineral fertilizers coated with rhizobia bring about an increase in the yield of cereal crops, in comparison with the same fertilizer without microorganisms.

### Deposit of biological material

The *Rhizobium leguminosarum* strains of the present application have been deposited at the Spanish Type Culture Collection (CECT), University of Valencia, Spain, in accordance with the regulations of the Treaty of Budapest. The deposit numbers and dates of the same are as follows:

| **Strain** | **Deposit Number** | **Date of deposit** |
|---|---|---|
| **LET 4910** | **CECT 8873** | **14/04/2015** |
| **LCS 2403** | **CECT 8874** | **14/04/2015** |
| **LPZ 2704** | **CECT 8875** | **14/04/2015** |
| **LBM 1210** | **CECT 7685** | **14/04/2010** |

### Bibliography

Jose Olivares Pascual. Fijación biológica de Nitrógeno, 2008.
   (http://www.eez.csic.es/∼olivares/ciencia/fijacion/)
Adnan, M. 2014. Integrated Effects of Rhizobial Inoculum and Inorganic Fertilizers on Wheat Yield and Yield Components. American Journal of Plant Sciences, 5.
García-Fraile, P., L. Carro, M. Robledo, M.H. Ramírez-Bahena, J.D. Flores-Félix, M.T. Fernández, P.F. Mateos, R. Rivas, J.M. Igual, E. Martinez-Molina, Á. Peix and E. Velázquez. 2012. Rhizobium promotes non-legumes growth and quality in several production steps: towards a biofertilization of edible raw vegetables healthy for humans. PLoS One 7, 5, e38122
Marks, B.B., M. Megías, M.A. Nogueira and M. Hungria. 2013. Biotechnological potential of rhizobial metabolites to enhance the performance of Bradyrhizobium spp. and Azospirillum brasilense inoculants with soybean and maize. AMB Express, 3: 21
Hirsch, P.R. 1996. Population dynamics of indigenous and genetically modified rhizobia in the field. New Phytologist 133: 159-171.
Albareda, M., D.N. Rodríguez-Navarro and F.J. Temprano. 2009. Soybean inoculation: Dose, N fertilizer supplementation and rhizobia persistence in soil. Field Crops Research 113: 352-356.
Penna, C., R. Massa, F. Olivieri, G. Gutkind and F. Cassán. 2011. A simple method to evaluate the number of bradyrhizobia on soybean seeds and its implication on inoculant quality control. AMB Express 1:21.
Herrmann, L. and D. Lesueur. 2013. Challenges of formulation and quality of biofertilizers. Appl Microbiol Biotechnol. 2013 Oct;97(20):8859-73

## Claims

1. A solid composition of fertilizer comprising granules of a mineral fertilizer at least partially coated with a rhizospheric microorganism with the ability to act as PGPR that is protected by at least one microorganism-protective compound to enable its survival under the physiochemical conditions of the fertilizer when the microorganism survival is tested according to the Most Probable Number method, wherein the microorganism is a species of the *Rhizobium* genus.

2. The composition as claimed in claim 1, wherein the microorganism is *Rhizobium leguminosarum.*

3. The composition as claimed in any one of claims 1-2, wherein the microorganism belongs to at least one of the CECT 7685, CECT 8873, CECT 8874, CECT 8875 strains of *Rhizobium leguminosarum,* alone or in any combination of the same.

4. The composition as claimed in any one of the preceding claims, wherein the concentration of microorganisms is between 6 x 10⁷ UFC/ml and 6 x 10⁹ UFC/ml.

5. The composition as claimed in any one of the preceding claims, wherein the microorganism-protective compound is carob gum.

6. The composition as claimed in any one of the preceding claims, wherein the fertilizer is a complex mineral fertilizer.

7. The composition as claimed in claim 6, wherein the complex mineral fertilizer is an NPK, NP, NK or PK complex.

8. A procedure for the manufacture of a fertilizer composition as claimed in any one of claims 1 to 7, which comprises the steps of:
a) growing the strain of the microorganism of the *Rhizobium* genus on YMA solid medium;
b) inoculating the culture resulting from step (a) in YMB liquid medium;
c) adding carob gum to the culture from step (b); and
d) coating the granules of mineral fertilizer at least partially with the culture from step (c).

9. The procedure as claimed in claim 8, wherein the coating of the fertilizer with the microorganism is performed between the 3^{rd} and 7^{th} days of the growth in step (b).

10. The procedure as claimed in either of claims 8 or 9, where the quantity of carob gum employed in step (c) is at least 0.25%.

11. The procedure as claimed in any of claims 8 to 10, where the quantity of carob gum employed in step (c) is at least 1.0%.

12. A procedure to enhance the growth of crops, comprising the step of applying the fertilizer composition as claimed in any one of the above claims 1 to 7 to a plant at any of its stages of growth, or directly to the soil to be used for the crop.

13. A procedure as claimed in claim 12, where the stage of growth of the plant is the seed of the plant.

14. The procedure as claimed in claim 13, wherein the concentration of microorganisms in the composition at the time of its application to the seed is at least 1 x 10² CFU.

15. The use of the composition as claimed in any of claims 1-7 on non-leguminous crops or on cereals.

## Patentansprüche

1. Feste Dünger-Zusammensetzung, umfassend Granulen von einem Mineraldünger, mindestens teilweise beschichtet mit einem Rhizosphären-Mikroorganismus mit der Fähigkeit, als PGPR zu wirken, der durch mindestens eine Mikroorganismus-schützende Verbindung zum Ermöglichen ihres Überlebens unter den physiochemischen Bedingungen des Düngers geschützt ist, wenn das Überleben des Mikroorganismus gemäß dem Titer-Verfahren getestet wird, wobei der Mikroorganismus eine Spezies der Gattung *Rhizobium* ist.

2. Zusammensetzung nach Anspruch 1, wobei der Mikroorganismus *Rhizobium leguminosarum* ist.

3. Zusammensetzung nach einem der Ansprüche 1-2, wobei der Mikroorganismus zu mindestens einem von den CECT 7685, CECT 8873, CECT 8874, CECT 8875 Stämmen von *Rhizobium leguminosarum* gehört, einzeln oder in beliebiger Kombination derselben.

4. Zusammensetzung nach einem der vorstehenden Ansprüche, wobei die Konzentration an Mikroorganismen zwischen 6 x 10⁷ UFC/ml und 6 x 10⁹ UFC/ml beträgt.

5. Zusammensetzung nach einem der vorstehenden Ansprüche, wobei die Mikroorganismus-schützende Verbindung Johannisbrotkernmehl ist.

6. Zusammensetzung nach einem der vorstehenden Ansprüche, wobei der Dünger ein Komplex-Mineraldünger ist.

7. Zusammensetzung nach Anspruch 6, wobei der Komplex-Mineraldünger ein NPK-, NP-, NK- oder PK-Komplex ist.

8. Verfahren zur Herstellung einer Dünger-Zusammensetzung nach einem der Ansprüche 1 bis 7, das die Schritte umfasst:
a) Züchten des Stamms von dem Mikroorganismus der *Rhizobium*-Gattung auf festem YMA-Medium;
b) Inokulieren der von Schritt (a) in flüssigem YMB-Medium erhaltenen Kultur;
c) Zusetzen von Johannisbrotkernmehl zu der Kultur von Schritt (b); und
d) Beschichten der Granulen von Mineraldünger mindestens teilweise mit der Kultur von Schritt (c).

9. Verfahren nach Anspruch 8, wobei die Beschichtung des Düngers mit dem Mikroorganismus zwischen den 3. und 7. Tagen des Züchtens in Schritt (b) ausgeführt wird.

10. Verfahren nach einem von Ansprüchen 8 oder 9, wobei die Menge an in Schritt (c) angewendetem Johannisbrotkernmehl mindestens 0,25 % ist.

11. Verfahren nach einem der Ansprüche 8 bis 10, wobei die Menge an in Schritt (c) angewendetem Johannisbrotkernmehl mindestens 1,0 % ist.

12. Verfahren zum Erhöhen des Wachstums von Pflanzenbestand, umfassend den Schritt des Applizierens der Dünger-Zusammensetzung nach einem der vorstehenden Ansprüche 1 bis 7 auf eine Pflanze zu jeder von ihren Wachstumsstadien oder direkt auf den für den Pflanzenbestand zu verwendenden Boden.

13. Verfahren nach Anspruch 12, wobei das Wachstumsstadium der Pflanze der Samen der Pflanze ist.

14. Verfahren nach Anspruch 13, wobei die Konzentration von Mikroorganismen in der Zusammensetzung während ihrer Applikation auf den Samen mindestens 1 x 10² CFU ist.

15. Verwendung der Zusammensetzung nach einem der Ansprüche 1-7 auf Nicht-Leguminosen-Pflanzenbestände oder auf Getreide.

## Revendications

1. Composition solide d'engrais comprenant des granules d'un engrais minéral au moins partiellement enrobées d'un micro-organisme rhizosphérique avec la capacité d'agir comme PGPR qui est protégé par au moins un composé protecteur de micro-organisme pour permettre sa survie dans les conditions physiochimiques de l'engrais lorsque la survie du micro-organisme est testée selon la méthode du nombre le plus probable, dans laquelle le micro-organisme est une espèce du genre *Rhizobium.*

2. Composition selon la revendication 1, dans laquelle le micro-organisme est *Rhizobium leguminosarum.*

3. Composition selon l'une quelconque des revendications 1 et 2, dans laquelle le micro-organisme appartient à au moins l'une des souches CECT 7685, CECT 8873, CECT 8874, CECT 8875 de *Rhizobium leguminosarum,* seul ou en combinaison quelconque de ceux-ci.

4. Composition selon l'une quelconque des revendications précédentes, dans laquelle la concentration de micro-organismes est comprise entre 6 x 10⁷ UFC/ml et 6 x 10⁹ UFC/ml.

5. Composition selon l'une quelconque des revendications précédentes, dans laquelle le composé protecteur de micro-organisme est la gomme de caroube.

6. Composition selon l'une quelconque des revendications précédentes, dans laquelle l'engrais est un engrais minéral sous forme de complexe.

7. Composition selon la revendication 6, **caractérisée en ce que** l'engrais minéral sous forme de complexe est un complexe NPK, NP, NK ou PK.

8. Procédé pour la fabrication d'une composition d'engrais selon l'une quelconque des revendications 1 à 7, qui comprend les étapes de :
a) faire croître la souche du micro-organisme du genre *Rhizobium* sur un milieu solide YMA ;
b) inoculer la culture issue de l'étape (a) dans du milieu liquide YMB ;
c) ajouter de la gomme de caroube à la culture de l'étape (b) ; et
d) enrober les granules d'engrais minéral au moins partiellement avec la culture de l'étape (c).

9. Procédé selon la revendication 8, dans lequel l'enrobage de l'engrais avec le micro-organisme est effectué entre le troisième et le septième jour de croissance de l'étape (b).

10. Procédé selon l'une quelconque des revendications 8 ou 9, dans lequel la quantité de gomme de caroube utilisée dans l'étape (c) est d'au moins 0,25 %.

11. Procédé selon l'une quelconque des revendications 8 à 10, dans lequel la quantité de gomme de caroube utilisée dans l'étape (c) est d'au moins 1,0 %.

12. Procédé pour améliorer la croissance des cultures, comprenant l'étape d'application de la composition d'engrais selon l'une quelconque des revendications 1 à 7 précédentes à une plante à n'importe lequel de ses stades de croissance, ou directement au sol à utiliser pour la récolte.

13. Procédé selon la revendication 12, dans lequel le stade de croissance de la plante est la graine de la plante.

14. Procédé selon la revendication 13, **caractérisé en ce que** la concentration de micro-organismes dans la composition au moment de son application sur la graine est d'au moins 1 x 10² CFU.

15. Utilisation de la composition selon l'une quelconque des revendications 1 à 7 sur des cultures non légumineuses ou sur des céréales.
